# EUROPEAN PATENT SPECIFICATION

(11) **EP 1 592 581 B1**
(45) Date of publication and mention of the grant of the patent: **21.05.2014**
(21) Application number: 04706064.5
(22) Date of filing: 28.01.2004
(51) Int. Cl.: B60R 9/055

(54) **CAR TOP CARRIER**
AUTODACHTRÄGER
PORTE-BAGAGE DE TOIT

(30) Priority: 28.01.2003 US 443437 P; 11.09.2003 US 662123
(43) Date of publication of application: 09.11.2005
(73) Proprietor: Yakima Products, Inc., Arcata, CA 95521 (US)
(72) Inventor: SETTELMAYER, Joseph, J., Fieldbrook, CA 95519 (US); ALLEN, Scott, R., Fieldbrook, CA 95519 (US); SMITH, Timothy, C., McKinleyville, CA 95519 (US)
(74) Representative: Stainthorpe, Vanessa Juliet
(86) International application number: PCT/US2004/002436
(87) International publication number: WO 2004/067326

(56) References cited:
- EP-A- 0 422 678
- EP-A- 0 754 595
- EP-A- 0 983 903
- EP-A- 1 190 906
- EP-A- 1 284 218
- DE-A1- 3 817 470
- DE-C1- 4 340 019
- SU-A1- 1 770 175
- US-A- 3 008 177
- US-A- 3 008 177
- US-A- 3 677 196
- US-A- 3 677 196
- US-A- 4 217 999
- US-A- 4 217 999
- US-A- 4 249 684
- US-A- 5 823 411
- US-A- 5 823 411
- US-A- 5 947 356
- US-A- 5 947 356

## Description

### Cross Reference to Related Application

This application is based upon and claims priority under 35 U.S.C. §119 from U.S. Provisional Patent Application Serial No. 60/443,487 filed January 28, 2003 and from U.S. Patent Application Serial No. 10/662,123 filed September 11, 2003, each of which is incorporated herein by reference in its entirety for all purposes.

### Field of the Invention

The invention relates to assemblies for carrying cargo on a vehicle. In particular, the invention provides improvements for a box or trunk designed for mounting on top of a car.

### Background of the Invention

In recent years car top carriers in the form of boxes or trunks have become quite popular. Enclosed carriers are preferable over conventional open racks for a variety of reasons. Enclosed carriers protect cargo from the elements such as wind, rain, and snow. Enclosed carriers are also more secure from theft or vandalism.

However, some car top boxes have problems which make them difficult or cumbersome to use. For example, some boxes use a labor intensive bracket system to secure the box on to the crossbars of a vehicle roof rack. Bracket systems typically require the installer to reach extensively over the top of the car. Such bracket systems are impractical, particularly for a short person. The installer may have to practically climb into the open box to secure the brackets. This is especially a problem for a user who frequently wants to install or remove the carrier from the car.

Another problem with some enclosed car top carriers is that they can only be accessed from one side. Depending on where or how the vehicle is parked, or who is trying to access the carrier, it may be inconvenient or awkward to always access the box from the same side.

Another problem with car top trunks or boxes is that they are sometimes difficult to open. Typically, there are several latches on the side of the box that opens. The user may have to operate multiple latches simultaneously where the latches are separated by a long distance. This may require substantial strength, dexterity, and reach. Some boxes have an actuator that coordinates simultaneous release of multiple latches but still may require special handling such as lifting of the cover while manipulating the actuator or handle. Accordingly, there is a need for enclosed car top carriers that are easy to mount on a vehicle and easy to use.

EP0754595 describes a quick-fastening device for a roof luggage box mounted on the cross bars of a vehicle roof, in which a U-shaped tension bracket is moveable upwards by a tension lever mounted inside the box to secure the box on the cross bar.

### Summary of the Invention

The invention is defined in the appended claims. An example of the invention uses a mounting assembly that is quick and easy to install on a car. A preferred design uses a cam-operated clamping device to grip crossbars on a vehicle rack. Another example of the invention uses coordinated hinge/latch devices to permit easy opening of the carrier from either side of a vehicle. Other examples and aspects of the invention are described in detail below.

### Brief Description of Drawings

Figure 1 is a side view of a car top carrier mounted on a vehicle.
Figure 2 is an exploded view of a car top carrier.
Figure 3 is a partial cut-away view of clamp 34c in Figure 1 gripping a crossbar.
Figures 4 and 5 are partial cut-away side views of the clamp in Figure 3 as the cam lever moves toward the release position.
Figure 6 is a top view of the clamp in Figure 3.
Figure 7 is an end-on view of the clamp in Figure 3.
Figure 8 is an inside view of a car top carrier with four clamps ganged together.
Figure 9 is an inside view of a car top carrier with two clamps ganged together.
Figures 16-18 are partial cut away views of a hinge/latch mechanism in operation.
Figure 19 is an isolated side view of a lid support device, for example, as shown in Figure 2.

### Description of the Invention

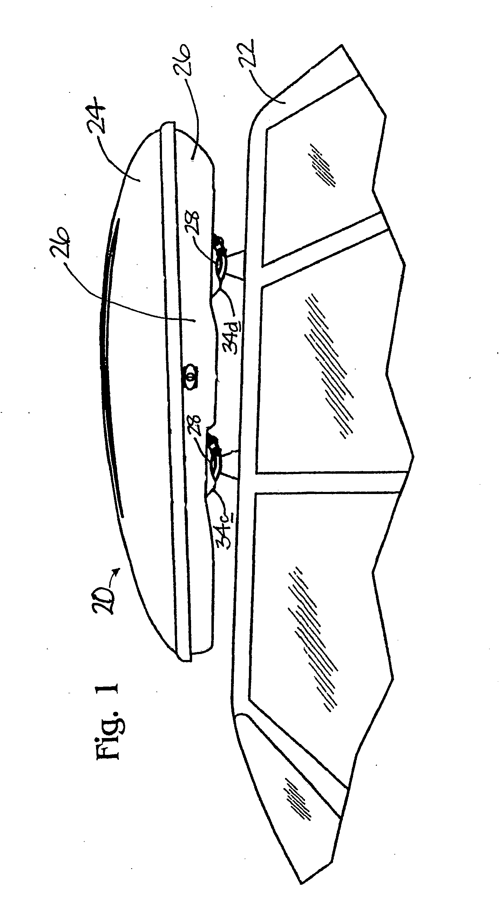

Figure 1 shows car top carrier 20 mounted on vehicle 22. Car top carrier 20 includes top 24 and bottom 26 mounted on crossbars 28 on the top of car 22.

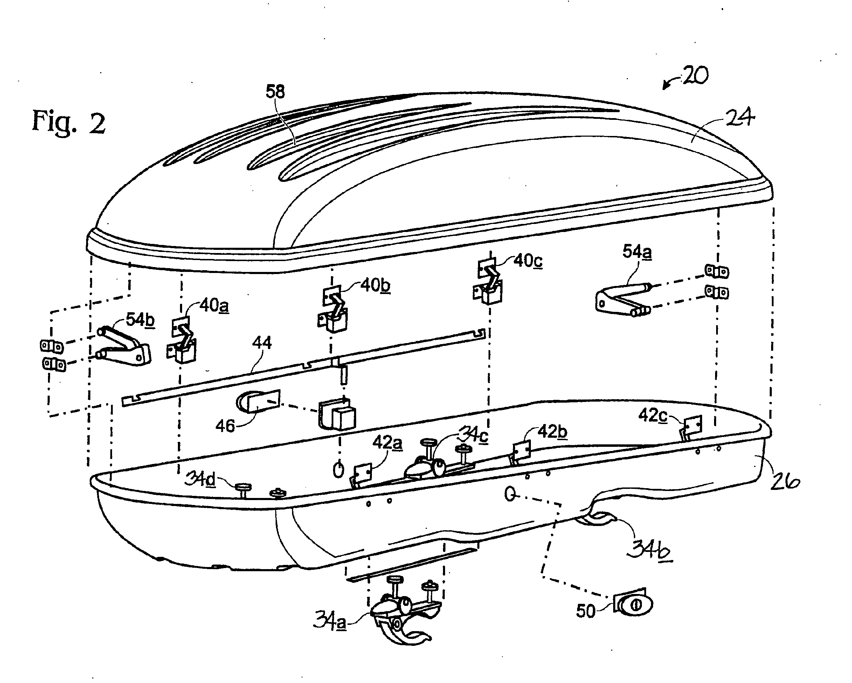

Figure 2 shows an exploded view of car top carrier or box 20. Mounting hardware is provided for easily securing carrier 20 to the vehicle rack. For example, four mounting mechanisms 34a-d may be provided for this purpose. Each mounting mechanism includes a cam lever for operating a jaw mechanism to clamp around a crossbar, as explained in more detail below. The clamps may be provided completely preassembled with the box. The clamps never need to be disassembled as the carrier is put on and off one or more cars through the life of the product. Each clamp may be adjustable to grip, with variable force, crossbars of different dimensions. The clamps may also be adjustable to different locations on the floor of the box, for example, along an axis parallel to the direction of vehicle travel. The clamps are preferably configured so that once the carrier clamps are adjusted for a particular vehicle configuration, the carrier can be easily installed or removed by simply manipulating each cam lever with a single, one step, switch, toggle, rotation, stroke or other quick-action, for example, with an over-center assist mechanism.

Longitudinal ribs or indentations 58 may be formed in carrier top 24 to provide stiffening and increased strength for carrier 20, and may also be desirable aesthetically.

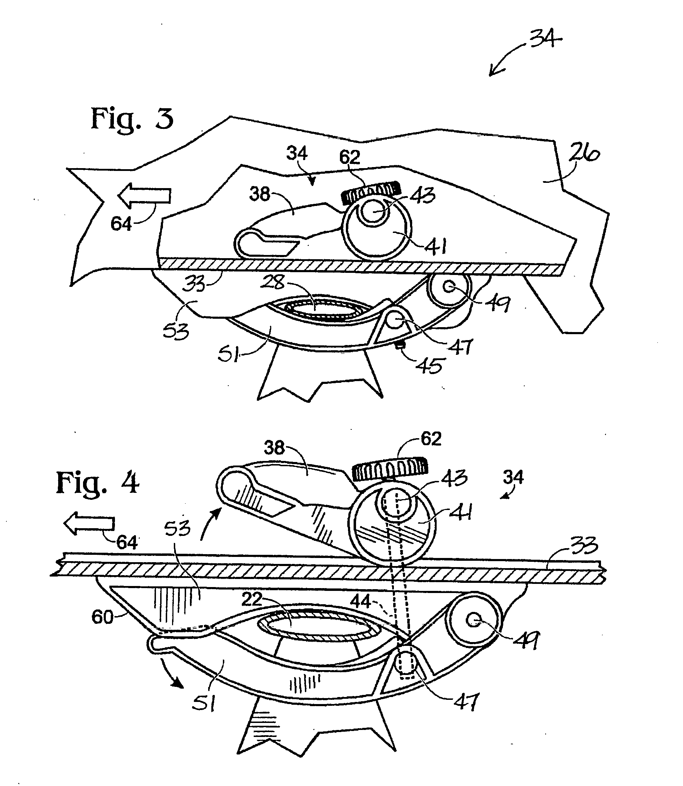

Figures 3-7 show details of one of the four mounting mechanisms, for example, as shown in Figure 2. Figure 3 is a side view of one of clamps 34, with a portion of bottom 26 of carrier 20 cut-away. In closed position, cam lever 38 seats against floor 33 of bottom 26. Cam lever 38 acts through cam potion 41, shaft member 43, bolt 45, barrel nut 47, and axle 49 to apply a force holding crossbar 28 tightly clamped between movable jaw portion 51 and stationary jaw portion 53.

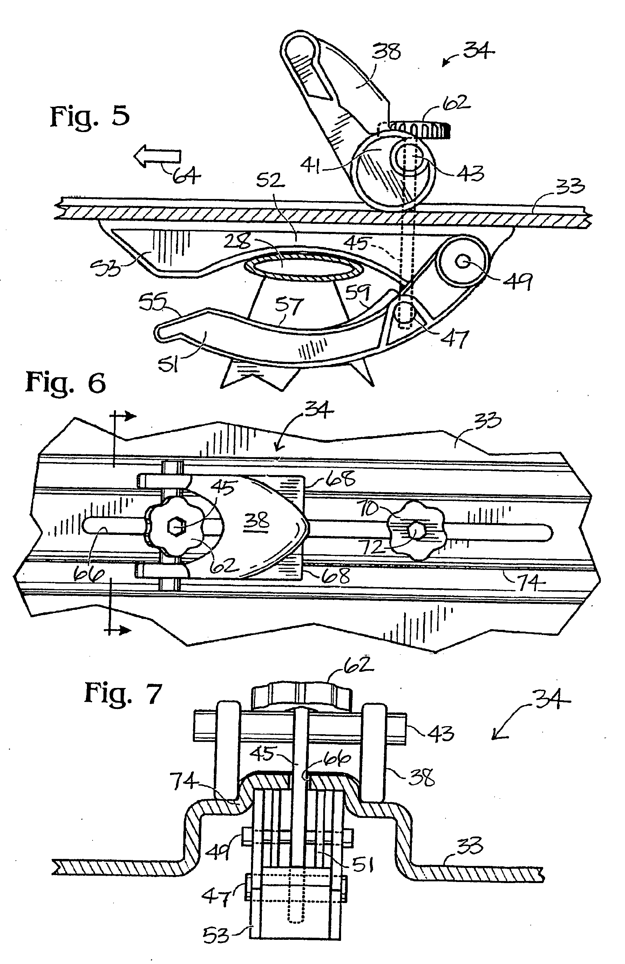

Figures 4 and 5 show details of clamp 34 moving to an unclamped position. Cam lever 38 pivots around shaft member 43. The shape of cam portion 41 and the position of shaft member 43 causes opening and closing of movable jaw portion 51 relative to stationary jaw portion 53 when cam lever 38 is rotated between different positions as shown in Figures 3 to 5. The jaw portions may define openings of different shapes for various purposes. The jaw portions in Figures 3-5 define an elongate curved opening, or oval shape to accommodate crossbars having different cross-sectional shapes. Cam portion 41 is shaped so that as lever 38 rotates around shaft member 43 the distance between shaft member 43 and floor 33 is altered, thus causing corresponding pivotal movement of jaw portion 51 toward or away from fixed stationary jaw potion 53 mounted on floor 33. An over-center mechanism is used so that a maximum height of shaft member 43 is reached at an intermediate point, for example, approximately at the location shown in Figure 4. This way lever 38 tends to stay locked in the closed position shown in Figure 3, and tends to spring to the unlocked position when lever 38 is moved over-center in the opposite direction, as shown in Figure 5. Movable jaw portion 51 pivots around axle structure 49. Movable jaw portion 51 is elongate, with an initial portion 55 angled so as to guide crossbar 28 into position between movable jaw portion 51 and stationary jaw portion 53. Movable jaw portion 51 has a concave inner surface 57 which contacts crossbar 28 when the jaw is closed, and which is configured for gripping. Concave inner surface 57 may have a cushion or pad 59 near axle 49. Stationary jaw portion 53 may have side tabs 61 to guide movable jaw portion 51 when clamp 34 is moved to the closed position.

Clamp 34 is mounted on floor 33 of carrier bottom 26 by bolt 45, with barrel nut 47 serving us an anchor pivot for bolt 45. In addition, a first oversize knob 63 turns bolt 45 to move barrel nut 47 closer to or farther away from shaft member 43, thereby providing a gross adjustment mechanism for the tightness of the clamping action. Movable jaw portion 51 clamps around crossbar 28. In Figures 3-5, arrow 64 indicates the direction of forward travel of vehicle 26. Movable jaw portion 51 preferably is oriented to open in the forward direction to make carrier 20 less likely to be dislodged from vehicle 22 in a high-impact forward collision.

Figure 6 shows a top view of clamp 34. Bolt 45 passes from the inside of car top carrier 20 to the outside through floor 33 of carrier bottom 26 via slot 66 which is aligned with the long axis of car top carrier 20. Slot 66 allows adjustment of the location of clamp 34 along the long axis of car top carrier 20. Finger tabs 68 facilitate prying or lifting of cam lever 38 away from floor 33 when opening clamp 34. Cam lever 38 is shaped to provide clearance for first oversize knob 62 when cam lever 38 is moved between open and closed positions. A second oversize knob 70 provides for tightening or loosening of fastener 72 passing through slot 66 to stationary jaw component 53 to prevent or allow motion of clamp 34 in slot 66. Floor 33 of bottom 30 is shaped in the form of a ridge or rail 74 to complement the shape of clamp 34 and to aid in seating cam lever 38 against floor 33 when clamp 34 is in the closed position, thereby providing repeatable and secure alignment.

Figure 7 is an end-on view of clamp 34, as shown in Figure 6. Shaft member 43 may include curvature away from barrel nut 47 so as to provide spring action during operation of clamp 34.

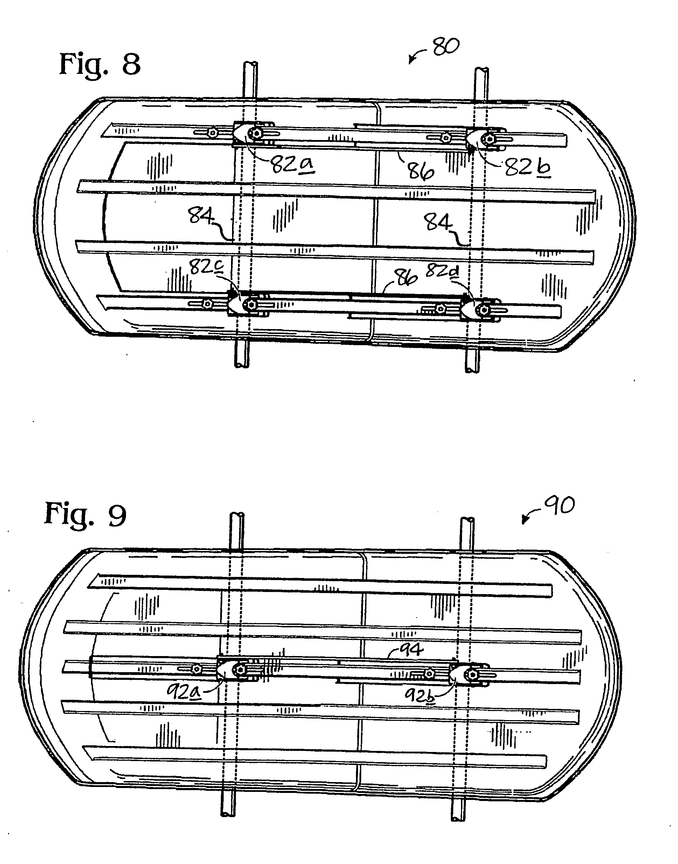

Figure 8 shows a top view of the interior of car top carrier 80 including four clamps 82a-d. In this example, all four clamps 82a-d are ganged by connectors 84 and 86. Ganging clamps allows multiple clamps to be operated with a single movement, step, or manipulation. Ganged clamp configurations may also make it easier to operate clamps located distally from the installer's vantage point.

Figure 9 shows another example. A top view of car top carrier 90 has two clamps 92a and 92b. In this example, two clamps 92a and 92b are located on front and rear crossbars, and are ganged by connector 94 so that clamps 92a and 92b open and close together.

Any number of clamps may be used to fasten a container on a set of crossbars on top of a vehicle. For example, one, two or more clamps may be used to secure a container on a front crossbar. Similarly, one, two or more clamps may be used to secure a container to a rear crossbar. For some purposes a single clamp may be sufficient, for example, on the front crossbar with the container merely resting on the back crossbar. In other instances, a single clamp may be used on each crossbar, or multiple clamps may be used on one or both crossbars.

Any combination of clamps may be ganged. For example, it may be advantageous to have a clamp which is closest to the hinge side of a box (distal clamp) ganged to a clamp on the opening side of the box (proximal clamp) so that operation of the proximal clamp automatically operates a corresponding distal clamp.

It may also be advantageous to have an extended handle or actuator connected to the distal clamp so that the distal clamp can be operated with minimal reaching from the open side of the container.

A clamp, as described above, may also be modified to provide automatic clamping. For example, the movable jaw portion may be spring biased toward the closed position. The lip of the jaw may be configured to cause opening of the jaw as the box slides forward across the top of the crossbars. Once the jaw encompasses the crossbar, it springs back to a secure closed position. The jaw is further configured so that it cannot be opened without a manipulation, for example, switch or lever-operated, action inside the box. This type of fastener may be referred to as "seat belt type engagement."

A jaw member as described above, may have different shapes. For example, the jaw member may be generically shaped to fit around differently shaped or dimensioned crossbars. Alternatively, the jaw member may be custom-shaped to fit around a specific crossbar configuration. For example, the jaw member may have a partially rectangular inner surface for fitting around a rectangular or square cross bar.

Clamping devices should be designed to minimize manufacturing costs and complexity. For example, a rail with a slot, as described above, may be molded into the floor of a box. A stationary jaw portion, movable jaw portion, and cam lever may be separately molded pieces.

Different kinds of actuators may be used to operate the jaw assembly. For example, an actuator may be a differently-shaped cam, or may be a screw mechanism using a threaded member. A cam lever may operate in different directions other than parallel to the long axis of a container as described above. Clamp mechanisms, as described above, may also be implemented to connect other types of apparatus to crossbars on top of a vehicle.

The clamp mechanisms shown and described herein may be implemented on boxes with any type of hinge and/or latch mechanism. For example, the clamping devices may be used on a box with dual functioning hinges that can operate as a hinge or a latch, for example, as described in U.S. Patent No. 5,823,411 and U.S. Provisional Patent Application No. 60/443,437, each of which is hereby incorporated by reference in its entirety.

While the present invention has been particularly shown and described with reference to the foregoing preferred embodiments, those skilled in the art will understand that many variations may be made therein without departing from the scope of the invention as variously described and defined above. The description of the invention should be understood to include all novel and non-obvious combinations of elements described herein.

## Claims

1. A cargo carrying case for rooftop mounting on a motor vehicle having a pair of crossbars (28), comprising:
a box (20) having a floor (33), and
at least one clamp device (34)
**characterized in that** the clamp device (34) comprises
a jaw device (51, 53) outside the box (20) for clamping the crossbar (28) against the floor (33) of the box, the jaw device being pivotable about a first axis (49) parallel to the crossbar between open and closed positions, so that when the jaw device (51, 53) is in the open position the crossbar (28) can be received or removed from the clamp (34), and when the jaw device is in the closed position the crossbar (28) is prevented from entering or exiting the clamp (34), and
an actuator (28) within the box (20), the actuator (28) being connected to the jaw device (51, 53).

2. The cargo carrying case of claim 1, wherein the first axis includes curvature away from the anchor pivot so as to provide spring action during clamp device operation.

3. The cargo carrying case of claim 1, wherein the first and second axes are parallel when the clamp device is in the closed position.

4. The cargo carrying case of claim 1, wherein the first and second axes are non-parallel when the clamp device is in the closed position.

5. The cargo carrying case of claim 4, wherein the first and second axes are perpendicular when the clamp device is in the closed position.

6. The cargo carrying case of any preceding claim, wherein the clamp device and the actuator are mounted opposite from each other on opposing sides of the floor of the box.

7. The cargo carrying case of any preceding claim further comprising
at least a second clamp device mounted outside the box, and a second actuator mounted inside the box for operating the clamp device between open and closed positions.

8. The cargo carrying case of any preceding claim, wherein the carrying case comprises a plurality of clamp devices.

9. The cargo carrying case of claim 8 wherein two or more clamp devices are arranged so as to clamp different crossbars.

10. The cargo carrying case of any preceding claim, wherein two or more clamp devices are arranged laterally so as to clamp the same crossbar.

11. The cargo carrying case of any preceding claim further comprising
at least three additional clamp devices mounted inside the box, each clamp device having a corresponding actuator mounted inside the box for operating the clamp device between open and closed positions.

12. The cargo carrying case of any preceding claim, wherein two of the clamp devices are positioned for securing the box on a front crossbar, and the other two clamp devices are positioned for securing the box on a rear crossbar.

13. The cargo carrying case of any preceding claim, wherein two or more clamp devices are ganged for easier and/or simultaneous opening and closing of the clamp devices.

14. The cargo carrying case of any preceding claim, wherein all of the clamp devices are ganged.

15. The cargo carrying case of any preceding claim, wherein the clamp device further comprises a stationary jaw device component.

16. The cargo carrying case of any preceding claim, wherein the clamp device includes a jaw structure having a stationary upper portion and a pivoting bottom portion that moves toward the upper portion when the actuator is moved from the first position to the second position.

17. The cargo carrying case of claim 16, wherein the bottom portion has a concave inner surface configured to at least partially encompass the crossbar.

18. The cargo carrying case of any one of claims 15 to 17, wherein the stationary jaw device component has side tabs to prevent side-to-side or flexing motion of the pivotable jaw device when the clamp device is in the closed position.

19. The cargo carrying case of any one of claims 15 to 18, wherein the clamp device further comprises a fastener passing through the slot to the stationary jaw device component, so that when the fastener is tightened the stationary jaw device component prevents motion of the clamp device in the slot.

20. The cargo carrying case of claim 1 or any of claims 2 to 5 or 15 to 19, wherein the jaw device is elongate, with an initial portion of the jaw device angled so as to guide the crossbar into the jaw device, and with a concave inner surface that contacts the crossbar and is configured for gripping, wherein the concave inner surface has a cushion pad near the first axis.

21. The cargo carrying case of any preceding claim, wherein the actuator is a threaded member.

22. The cargo carrying case of any claims 1 to 20, wherein the actuator is a lever structure.

23. The cargo carrying case of claim 22, wherein the lever structure has a cam portion.

24. The cargo carrying case of claim 22 or 23, wherein the lever structure has an over-center action between the open position and closed position.

25. The cargo carrying case of claim 1 or any of claims 2 to 5, wherein the actuator is a cam lever and is connected to the jaw device through an opening in the floor so that movement of the cam lever around a second axis inside the box causes movement of the jaw device between open and closed positions.

26. The cargo carrying case of claim 25, wherein the opening in the floor is a slot perpendicular to the crossbar, so that, when the clamp device is in the open position, the clamp device can be moved in a direction perpendicular to the crossbar.

27. The cargo carrying case of claims 25 or 26, wherein the cam lever includes finger tabs at the end of the cam lever farthest from the second axis for ease in moving the cam lever to the open position.

28. The cargo carrying case of claims 25, 26 or 27, wherein the floor has a surface characteristic that complements the shape of the cam lever so that moving the cam lever to the closed position seats the cam lever and provides repeatable alignment.

29. The cargo carrying case of any one of claims 25 to 28, wherein the floor close to the clamp device is shaped in the form of a ridge so that moving the cam lever to the closed position seats the cam lever against the ridge.

30. The cargo carrying case of any preceding claim, wherein the clamp device is provided with a gross adjustment mechanism.

31. The cargo carrying case of claim 30, wherein the gross adjustment mechanism is a bolt with the threaded end of the bolt being received in an anchor pivot in the jaw device, the anchor pivot being set away from the first axis, and with the head end of the bolt being received in an oversized knob so as to make gross adjustment easier.

32. The cargo carrying case of claim 31, wherein the actuator is shaped to provide clearance for the oversized knob when the actuator is moved from the open to the closed position or vice versa.

## Patentansprüche

1. Lastentransportkoffer zur Dachmontage auf einem Motorfahrzeug mit einem Paar von Querträgern (28), folgendes umfassend:
eine Box (20) mit einem Boden (33), und
mindestens eine Klemmvorrichtung (34),
**dadurch gekennzeichnet, dass** die Klemmvorrichtung (34) folgendes umfasst:
eine Klemmbackenvorrichtung (51, 53) außerhalb der Box (20) zum Klemmen des Querträgers (28) gegen den Boden (33) der Box, wobei die Klemmbackenvorrichtung um eine erste Achse (49) parallel zu dem Querträger zwischen offenen und geschlossenen Stellungen drehbar ist, so dass, wenn sich die Klemmbackenvorrichtung an der offenen Stellung befindet, der Querträger (28) von der Klemmvorrichtung (34) empfangen oder entfernt werden kann, und wobei, wenn sich die Klemmbackenvorrichtung an der geschlossenen Stellung befindet, verhindert wird, dass der Querträger (28) in die Klemmvorrichtung (34) eintritt oder aus dieser austritt; und
einen Aktuator (28) in der Box (20), wobei der Aktuator mit der Klemmbackenvorrichtung (51, 53) verbunden ist.

2. Lastentransportkoffer nach Anspruch 1, wobei die erste Achse eine von dem Ankerdrehpunkt weggehende Krümmung aufweist, so dass während der Betätigung der Klemmvorrichtung eine Federwirkung vorgesehen wird.

3. Lastentransportkoffer nach Anspruch 1, wobei die ersten und zweiten Achsen parallel sind, wenn sich die Klemmvorrichtung an der geschlossenen Stellung befindet.

4. Lastentransportkoffer nach Anspruch 1, wobei die ersten und zweiten Achsen nicht parallel sind, wenn sich die Klemmvorrichtung an der geschlossenen Stellung befindet.

5. Lastentransportkoffer nach Anspruch 1, wobei die ersten und zweiten Achsen senkrecht zueinander sind, wenn sich die Klemmvorrichtung an der geschlossenen Stellung befindet.

6. Lastentransportkoffer nach einem der vorstehenden Ansprüche, wobei die Klemmvorrichtung und der Aktuator gegenüberliegend auf entgegengesetzten Seiten des Bodens der Box montiert sind.

7. Lastentransportkoffer nach einem der vorstehenden Ansprüche, ferner folgendes umfassend:
mindestens eine zweite Klemmvorrichtung, die außerhalb der Box montiert ist, und einen zweiten Aktuator in der Box, zur Betätigung der Klemmvorrichtung zwischen offenen und geschlossenen Stellungen.

8. Lastentransportkoffer nach einem der vorstehenden Ansprüche, wobei der Transportkoffer eine Mehrzahl von Klemmvorrichtungen umfasst.

9. Lastentransportkoffer nach Anspruch 8, wobei zwei oder mehr Klemmvorrichtungen so angeordnet sind, dass sie unterschiedliche Querträger klemmen.

10. Lastentransportkoffer nach Anspruch 8, wobei zwei oder mehr Klemmvorrichtungen lateral angeordnet sind, so dass die den gleichen Querträger klemmen.

11. Lastentransportkoffer nach einem der vorstehenden Ansprüche, ferner folgendes umfassend:
mindestens drei zusätzliche Klemmvorrichtungen, die in der Box montiert sind, wobei jede Klemmvorrichtung einen entsprechenden Aktuator aufweist, der in der Box zur Betätigung der Klemmvorrichtung zwischen offenen und geschlossenen Stellungen montiert ist.

12. Lastentransportkoffer nach einem der vorstehenden Ansprüche, zwei der Klemmvorrichtungen zum Sichern der Box auf einem vorderen Querträger positioniert sind, und wobei die beiden anderen Klemmvorrichtungen zum Sichern der Box auf einem hinteren Querträger positioniert sind.

13. Lastentransportkoffer nach einem der vorstehenden Ansprüche, wobei zwei oder mehr Klemmvorrichtungen mechanisch gekoppelt sind, um ein einfacheres und/oder gleichzeitiges Öffnen und Schließen der Klemmvorrichtungen zu ermöglichen.

14. Lastentransportkoffer nach einem der vorstehenden Ansprüche, wobei alle Klemmvorrichtungen mechanisch gekoppelt sind.

15. Lastentransportkoffer nach einem der vorstehenden Ansprüche, wobei die Klemmvorrichtung ferner eine feststehende Klemmbackenvorrichtungskomponente umfasst.

16. Lastentransportkoffer nach einem der vorstehenden Ansprüche, wobei die Klemmvorrichtung eine Klemmbackenstruktur mit einem feststehenden oberen Teilstück und einem drehbaren unteren Teilstück aufweist, das sich in Richtung des oberen Teilstücks bewegt, wenn der Aktuator von der ersten Stellung an die zweite Stellung bewegt wird.

17. Lastentransportkoffer nach Anspruch 16, wobei das untere Teilstück eine konkave innere Oberfläche aufweist, die so konfiguriert ist, dass sie zumindest teilweise den Querträger einschließt.

18. Lastentransportkoffer nach einem der Ansprüche 15 bis 17, wobei die feststehende Klemmbackenvorrichtungskomponente Seitenstreifen aufweist, um eine Bewegung der drehbaren Klemmbackenvorrichtung von Seite zu Seite oder eine biegende Bewegung zu verhindern, wenn sich die Klemmvorrichtung an der geschlossenen Stellung befindet.

19. Lastentransportkoffer nach einem der Ansprüche 15 bis 18, wobei die Klemmvorrichtung ferner eine Befestigungseinrichtung umfasst, die durch den Schlitz zu der feststehenden Klemmbackenvorrichtungskomponente verläuft, so dass, wenn die Befestigungseinrichtung festgezogen wird, die feststehende Klemmbackenvorrichtungskomponente eine Bewegung der Klemmvorrichtung in dem Schlitz verhindert.

20. Lastentransportkoffer nach Anspruch 1 oder einem der Ansprüche 2 bis 5 oder 15 bis 19, wobei die Klemmbackenvorrichtung elongiert ist, wobei ein erstes Teilstück der Klemmbackenvorrichtung einen Winkel aufweist, um den Querträger in die Klemmbackenvorrichtung zu führen, und mit einer konkaven inneren Oberfläche, welche den Querträger berührt und zum Ergreifen konfiguriert ist, wobei die konkave innere Oberfläche ein Polsterkissen nahe der ersten Achse aufweist.

21. Lastentransportkoffer nach einem der vorstehenden Ansprüche, wobei es sich bei dem Aktuator um ein Gewindeelement handelt.

22. Lastentransportkoffer nach einem der Ansprüche 1 bis 20, wobei es sich bei dem Aktuator um eine Hebelstruktur handelt.

23. Lastentransportkoffer nach Anspruch 22, wobei die Hebelstruktur ein Nockenteilstück aufweist.

24. Lastentransportkoffer nach Anspruch 22 oder 23, wobei die Hebelstruktur eine Übertotpunktwirkung zwischen der offenen Stellung und der geschlossenen Stellung aufweist.

25. Lastentransportkoffer nach Anspruch 1 oder einem der Ansprüche 2 bis 5, wobei es sich bei dem Aktuator um einen Nockenhebel handelt, der über eine Öffnung in dem Boden mit der Klemmbackenvorrichtung verbunden ist, so dass eine Bewegung des Nockenhebels um eine zweite Achse in der Box eine Bewegung der Klemmbackenvorrichtung zwischen offenen und geschlossenen Stellungen bewirkt.

26. Lastentransportkoffer nach Anspruch 25, wobei die Öffnung in dem Boden ein Schlitz ist, der senkrecht zu dem Querträger ist, so dass, wenn sich die Klemmvorrichtung an der offenen Stellung befindet, die Klemmvorrichtung in eine senkrechte Richtung zu dem Querträger bewegt werden kann.

27. Lastentransportkoffer nach Anspruch 25 oder 26, wobei der Nockenhebel Fingerstreifen an dem am weitesten von der zweiten Achse entfernten Ende des Nockenhebels aufweist, um eine einfache Bewegung des Nockenhebels an die offene Stellung zu ermöglichen.

28. Lastentransportkoffer nach Anspruch 25, 26 oder 27, wobei der Boden ein Oberflächenmerkmal aufweist, das mit der Form des Nockenhebels zusammenpasst, so dass die Bewegung des Nockenhebels an die geschlossene Stellung den Nockenhebel setzt und eine wiederholbare Ausrichtung vorsieht.

29. Lastentransportkoffer nach einem der Ansprüche 25 bis 28, wobei der Boden nahe der Klemmvorrichtung in Form eines Kamms geformt ist, so dass die Bewegung des Nockenhebels an die geschlossene Stellung den Nockenhebel an dem Kamm setzt.

30. Lastentransportkoffer nach einem der vorstehenden Ansprüche, wobei die Klemmvorrichtung mit einem Grobeinstellungsmechanismus versehen ist.

31. Lastentransportkoffer nach Anspruch 30, wobei es sich bei dem Grobeinstellungsmechanismus um einen Bolzen handelt, wobei das Gewindeende des Bolzens in einem Ankerdrehpunkt in der Klemmbackenvorrichtung aufgenommen wird, wobei der Ankerdrehpunkt entfernt von der ersten Achse angeordnet ist, und wobei das Kopfende des Bolzens in einem groß dimensionierten Knopf aufgenommen wird, um die Grobeinstellung zu erleichtern.

32. Lastentransportkoffer nach Anspruch 31, wobei der Aktuator so geformt ist, dass er Freiraum für den groß dimensionierten Knopf vorsieht, wenn der Aktuator von der offenen an die geschlossene Stellung und vice versa bewegt wird.

## Revendications

1. Porte-bagages destiné à être monté sur le toit d'un véhicule à moteur ayant une paire de barres transversales (28), comprenant :
une caisse (20) ayant une partie inférieure (33), et
au moins un dispositif de serrage (34),
**caractérisé en ce que** le dispositif de serrage (34) comprend
un dispositif à mâchoires (51, 53) à l'extérieur de la caisse (20) pour serrer la barre traverse (28) contre la partie inférieure (33) de la caisse, le dispositif à mâchoires pouvant pivoter autour d'un premier axe (49) parallèle à la barre transversale entre des positions ouverte et fermée, de sorte que lorsque le dispositif à mâchoires (51, 53) est en position ouverte, la barre transversale (28) peut être reçue ou retirée du collier de serrage, et lorsque le dispositif à mâchoires est en position fermée, la barre transversale (28) est empêchée d'entrer ou de sortir du serrage (34), et
un actionneur (28) à l'intérieur de la caisse (20), l'actionneur (28) étant relié au dispositif à mâchoires (51, 53).

2. Porte-bagages selon la revendication 1, dans lequel le premier axe comprend une courbure à l'opposé du pivot d'ancrage de sorte à fournir une action de ressort pendant le fonctionnement du dispositif de serrage.

3. Porte-bagages selon la revendication 1, dans lequel les premier et second axes sont parallèles lorsque le dispositif de serrage est en position fermée.

4. Porte-bagages selon la revendication 1, dans lequel les premier et second axes ne sont pas parallèles lorsque le dispositif de serrage est en position fermée.

5. Porte-bagages selon la revendication 4, dans lequel les premier et second axes sont perpendiculaires lorsque le dispositif de serrage est en position fermée.

6. Porte-bagages selon l'une quelconque des revendications précédentes, dans lequel le dispositif de serrage et l'actionneur sont montés en face l'un de l'autre sur des côtés opposés de la partie inférieure de la caisse.

7. Porte-bagages selon l'une quelconque des revendications précédentes, comprenant en outre :
au moins un second dispositif de serrage monté à l'extérieur de la caisse, et un second actionneur monté à l'intérieur de la caisse pour actionner le dispositif de serrage entre les positions ouverte et fermée.

8. Porte-bagages selon l'une quelconque des revendications précédentes, dans lequel le porte-bagages comprend une pluralité de dispositifs de serrage.

9. Porte-bagages selon la revendication 8, dans lequel deux dispositifs de serrage ou plus sont agencés de sorte à serrer différentes barres transversales.

10. Porte-bagages selon l'une quelconque des revendications précédentes, dans lequel deux dispositifs de serrage ou plus sont placés latéralement de sorte à serrer la même barre transversale.

11. Porte-bagages selon l'une quelconque des revendications précédentes, comprenant en outre :
au moins trois dispositifs de serrage supplémentaires sont montés à l'intérieur de la caisse, chaque dispositif de serrage ayant un actionneur correspondant monté à l'intérieur de la caisse pour actionner le dispositif de serrage entre les positions ouverte et fermée.

12. Porte-bagages selon l'une quelconque des revendications précédentes, dans lequel deux des dispositifs de serrage sont placés pour fixer la caisse sur une barre transversale avant, et les deux autres dispositifs de serrage sont placés pour fixer la caisse sur une barre transversale arrière.

13. Porte-bagages selon l'une quelconque des revendications précédentes, dans lequel deux dispositifs de serrage ou plus sont jumelés pour une ouverture et une fermeture plus faciles et/ou simultanées des dispositifs de serrage.

14. Porte-bagages selon l'une quelconque des revendications précédentes, dans lequel tous les dispositifs de serrage sont jumelés.

15. Porte-bagages selon l'une quelconque des revendications précédentes, dans lequel le dispositif de serrage comprend en outre un élément dispositif à mâchoires fixe.

16. Porte-bagages selon l'une quelconque des revendications précédentes, dans lequel le dispositif de serrage comprend une structure de mâchoire ayant une partie supérieure fixe et une partie inférieure pivotante qui se déplace vers la partie supérieure lorsque l'actionneur est déplacé de la première position à la seconde position.

17. Porte-bagages selon la revendication 16, dans lequel la partie inférieure a une surface interne concave conçue pour englober au moins partiellement la barre transversale.

18. Porte-bagages selon l'une quelconque des revendications 15 à 17, dans lequel l'élément dispositif à mâchoires fixe a des pattes latérales pour empêcher le mouvement de flexion ou d'un côté à l'autre du dispositif à mâchoires pouvant pivoter lorsque le dispositif de serrage est en position fermée.

19. Porte-bagages selon l'une quelconque des revendications 15 à 18, dans lequel le dispositif de serrage comprend en outre une fixation passant à travers la fente vers l'élément dispositif à mâchoires fixe, de sorte que lorsque la fixation est serrée l'élément dispositif à mâchoires fixe empêche le mouvement du dispositif de serrage dans la fente.

20. Porte-bagages selon la revendication 1 ou l'une quelconque des revendications 2 à 5 ou 15 à 19, dans lequel le dispositif à mâchoires est allongé, une partie initiale du dispositif à mâchoires étant inclinée de sorte à guider la barre transversale dans le dispositif à mâchoires, et une surface interne concave étant en contact avec la barre transversale et conçue pour une préhension, dans lequel la surface interne concave a un patin rembourré à proximité du premier axe.

21. Porte-bagages selon l'une quelconque des revendications précédentes, dans lequel l'actionneur est un élément fileté.

22. Porte-bagages selon l'une quelconque des revendications 1 à 20, dans lequel l'actionneur est une structure à levier.

23. Porte-bagages selon la revendication 22, dans lequel la structure à levier a une partie de came.

24. Porte-bagages selon la revendication 22 ou 23, dans lequel la structure à levier a une action de dépassement de centre entre la position ouverte et la position fermée.

25. Porte-bagages selon la revendication 1 ou l'une quelconque des revendications 2 à 5, dans lequel l'actionneur est un levier de came et est relié au dispositif à mâchoires à travers une ouverture dans la partie inférieure de sorte que le mouvement du levier de came autour d'un second axe à l'intérieur de la caisse entraîne le mouvement du dispositif à mâchoires entre les positions ouverte et fermée.

26. Porte-bagages selon la revendication 25, dans lequel l'ouverture dans la partie inférieure est une fente perpendiculaire à la barre transversale, de sorte que, lorsque le dispositif de serrage est en position ouverte, le dispositif de serrage peut être déplacé dans une direction perpendiculaire à la barre transversale.

27. Porte-bagages selon la revendication 25 ou 26, dans lequel le levier de came comprend des doigts à l'extrémité du levier de came le plus loin du second axe pour faciliter le déplacement du levier de came à la position ouverte.

28. Porte-bagages selon la revendication 25, 26 ou 27, dans lequel la partie inférieure a une caractéristique de surface qui est complémentaire de la forme du levier de came de sorte que le déplacement du levier de came à la position fermée accueille le levier à came et fournit un alignement pouvant être répété.

29. Porte-bagages selon l'une quelconque des revendications 25 à 28, dans lequel la partie inférieure à proximité du dispositif de serrage est conformée sous la forme d'une nervure de sorte que le déplacement du levier de came à la position fermée accueille le levier de came contre la nervure.

30. Porte-bagages selon l'une quelconque des revendications précédentes, dans lequel le dispositif de serrage est pourvu d'un mécanisme de réglage brut.

31. Porte-bagages selon la revendication 30, dans lequel le mécanisme d'ajustement brut est un boulon, l'extrémité filetée du boulon étant logée dans un pivot d'ancrage dans le dispositif à mâchoires, le pivot d'ancrage étant fixé à l'opposé du premier axe, et l'extrémité de tête du boulon étant reçue dans un bouton surdimensionné de sorte à faciliter l'ajustement brut.

32. Porte-bagages selon la revendication 31, dans lequel l'actionneur est formé pour fournir un dégagement pour le bouton surdimensionné lorsque l'actionneur est déplacé de la position ouverte à la position fermée ou vice-versa.
